# EUROPEAN PATENT APPLICATION

(11) **EP 4 501 517 A1**
(43) Date of publication of application: **05.02.2025**
(21) Application number: 23895658.5
(22) Date of filing: 02.02.2023
(51) Int. Cl.: B23K 20/10, B23K 20/26

(54) **MACHINING MECHANISM AND ULTRASONIC WELDING DEVICE**

(30) Priority: 30.11.2022 CN 202223187079 U
(71) Applicant: Contemporary Amperex Technology Co., Limited, Ningde, Fujian 352100 (CN)
(72) Inventor: YANG, Jinyun, Ningde, Fujian 352100 (CN); TANG, Xiaokun, Ningde, Fujian 352100 (CN); XIANG, Chenying, Ningde, Fujian 352100 (CN); CHEN, Yun, Ningde, Fujian 352100 (CN)
(74) Representative: Kraus & Lederer PartGmbB
(86) International application number: PCT/CN2023/074242
(87) International publication number: WO 2024/113482

(57) **Abstract**

A processing mechanism (10) is provided, including: a welding head (11), where the welding head has a welding mark end surface (111) at an end in a second direction (Z), and a middle portion of the welding mark end surface in a first direction (X) protrudes, so that the welding mark end surface is curved in an arch shape; and welding teeth (12) distributed on the welding mark end surface. Since a front portion or rear portion of the welding mark end surface in a reciprocating vibration direction is bent away from a to-be-welded workpiece (30), when the welding mark end surface is inclined due to friction, a pressing force of the front portion or rear portion of the welding mark end surface on the to-be-welded workpiece can be reduced, avoiding or reducing the risk of cracks occurring in the front portion or rear portion of a welding mark region (31), thereby effectively protecting the to-be-welded workpiece and reducing the risk of the to-be-welded workpiece being broken due to pressing of the welding mark end surface. This application further relates to an ultrasonic welding apparatus (100).

## Description

This application claims priority to Chinese Patent Application No. 202223187079.2, filed with the China National Intellectual Property Administration on November 30, 2022 and entitled "PROCESSING MECHANISM AND ULTRASONIC WELDING APPARATUS", which is incorporated herein by reference in its entirety.

### TECHNICAL FIELD

This application pertains to the field of ultrasonic welding technologies and more specifically relates to a processing mechanism and an ultrasonic welding apparatus.

### BACKGROUND

The description herein merely provides background information related to this application and does not necessarily constitute the prior art. An ultrasonic welding apparatus is generally provided with welding teeth on an operating plane of a welding head, so that the welding teeth come into contact with and drive to-be-welded workpieces to undergo reciprocating ultrasonic vibration. Thus, the to-be-welded workpieces are connected through welding by virtue of heat generated by friction caused by ultrasonic vibration between the to-be-welded workpieces. When the welding head vibrates before and after coming into contact with the to-be-welded workpieces, a reverse acting force is generated on the welding head, causing the welding head to be inclined with respect to a welding holder. When the ultrasonic welding apparatus is used to weld thin workpieces such as a foil material, for example, used to weld a tab of a battery to an adapting piece, cracks are likely to occur in a front portion or rear portion of a welding mark region, or even the workpiece is broken.

### TECHNICAL PROBLEM

Embodiments of this application are intended to provide a processing mechanism and an ultrasonic welding apparatus to solve the problem that in related technologies, when a thin workpiece is welded by an ultrasonic welding apparatus, cracks are likely to occur in a front portion or rear portion of a welding mark region, or even the workpiece is broken.

### TECHNICAL SOLUTION

The embodiments of this application use the following technical solution.

According to a first aspect, an embodiment of this application provides a processing mechanism including: a welding head, where the welding head has a welding mark end surface at an end in a second direction, and a middle portion of the welding mark end surface in a first direction protrudes away from the welding head, so that the welding mark end surface is curved in an arch shape; and welding teeth, where a plurality of welding teeth are distributed on the welding mark end surface. The first direction is parallel to a reciprocating movement direction of reciprocating vibration of the welding head during welding; the second direction is a length direction of the welding head; and the second direction is perpendicular to the first direction.

In the technical solution of this embodiment of this application, the welding mark end surface of the welding head is in an arch shape, so that the middle portion of the welding mark end surface in the first direction protrudes. Thus, when the welding mark end surface presses against a to-be-welded workpiece and drives the to-be-welded workpiece to undergo reciprocating vibration along the first direction, if the welding mark end surface is inclined due to a friction force, a pressing force of a front portion or rear portion of the welding mark end surface in a reciprocating vibration direction on the to-be-welded workpiece can be reduced because the front portion or rear portion of the welding mark end surface in the reciprocating vibration direction is bent away from the to-be-welded workpiece, avoiding or reducing the risk of cracks occurring in a front portion or rear portion of a welding mark region, thereby effectively protecting the to-be-welded workpiece and reducing the risk of the to-be-welded workpiece being broken due to pressing of the welding mark end surface.

In some embodiments, a cross section of the welding mark end surface parallel to the first direction is in an arc shape or a smooth curve shape.

The above structural arrangement can reduce edges of the welding mark end surface that are in contact with the to-be-welded workpiece, thereby avoiding the problem of cracking of the to-be-welded workpiece due to pressing of the edges.

In some embodiments, a plane passing through the middle portion of the welding head in the first direction and perpendicular to the first direction is an intermediate plane, and two opposite sides of the welding mark end surface on the intermediate plane are respectively a first region and a second region.

The first region and the second region are symmetrically arranged with respect to the intermediate plane; or a bending amplitude of the first region is greater than a bending amplitude of the second region.

With the above structural arrangement, when the first region and the second region are symmetrically arranged with respect to the intermediate plane, pressing force applied from the welding mark end surface to two ends of the to-be-welded workpiece in the first direction can be balanced, making the to-be-welded workpiece be welded more uniformly and firmly. For a case in which the welding head is likely to be inclined towards the second region during welding, setting the bending amplitude of the first region to be greater than the bending amplitude of the second region can reduce pressing force from the two ends of the welding mark end surface in the first direction to the to-be-welded workpiece, thereby effectively protecting the to-be-welded workpiece and avoiding or reducing the risk of cracks occurring in the front portion or rear portion of the welding mark region. In addition, for a to-be-welded workpiece with an uneven thickness, a thicker side of the to-be-welded workpiece can be placed at a corresponding position of the first region, so that the pressing force applied from the welding mark end surface to the to-be-welded workpiece is more balanced, thereby making the to-be-welded workpiece be welded more uniformly and firmly.

In some embodiments, points on the welding teeth that are farthest from the welding mark end surface in a direction perpendicular to the welding mark end surface are far points, where a surface on which a plurality of far points are located is a far surface, and a middle portion of the far surface in the first direction protrudes so that the far surface is curved in an arch shape.

With the above structural arrangement, the far surface is curved in an arch shape, and the middle portion of the far surface in the first direction protrudes, so that when the welding mark end surface and the welding teeth press against the to-be-welded workpiece, an acting force of the welding teeth pressing against the to-be-welded workpiece is more balanced, thereby allowing the welding mark end surface and the welding teeth to better drive the to-be-welded workpiece to undergo reciprocating vibration.

In some embodiments, the far surface is parallel to the welding mark end surface.

With the above structural arrangement, the far surface is parallel to the welding mark end surface, so that distances from the welding teeth to the welding mark end are approximately the same, facilitating the design, processing, and manufacture of the welding teeth. Moreover, when the welding mark end surface and the welding teeth press against the to-be-welded workpiece, distances that the welding teeth press into the to-be-welded workpiece are approximately the same, making the acting force of the welding teeth on the to-be-welded workpiece more balanced, thereby allowing the welding mark end surface and the welding teeth to better drive the to-be-welded workpiece to undergo reciprocating vibration.

In some embodiments, heights of portions of the welding teeth that protrude from the welding mark end surface are equal.

The above structural arrangement can facilitate the design, processing, and manufacture of the welding teeth, make the distances that the welding teeth press into the to-be-welded workpiece equal, and make the acting force of the welding teeth on the to-be-welded workpiece more balanced, thereby allowing the welding mark end surface and the welding teeth to better drive the to-be-welded workpiece to undergo reciprocating vibration.

In some embodiments, heights of portions of the welding teeth that protrude from the welding mark end surface gradually increase along a direction from the middle portion to the two ends of the welding mark end surface in the first direction.

Alternatively, heights of portions of the welding teeth that protrude from the welding mark end surface gradually decrease along a direction from the middle portion to the two ends of the welding mark end surface in the first direction.

With the above structural arrangement, the heights of the portions of the welding teeth on two sides of the welding mark end surface that protrude from the welding mark end surface are set to gradually decrease, so that when the welding mark end surface presses against the to-be-welded workpiece and the welding head is inclined due to vibration, pressing of the welding teeth on the to-be-welded workpiece due to the inclination of the welding head is reduced, thereby better avoiding or reducing the risk of cracks occurring in the front portion or rear portion of the welding mark region. The heights of the portions of the welding teeth on two sides of the welding mark end surface that protrude from the welding mark end surface are set to gradually increase, so that when the welding mark end surface presses against the to-be-welded workpiece, the welding teeth at an end portion can press more into the to-be-welded workpiece, increasing a pressing force on the to-be-welded workpiece to stabilize the to-be-welded workpiece, thereby better driving the to-be-welded workpiece to undergo reciprocating vibration.

In some embodiments, points on the welding teeth that are farthest from the welding mark end surface in the second direction are far end points, where a surface on which a plurality of far end points are located is a far end surface, the far end surface is a plane, and the second direction is perpendicular to the far end surface.

With the above structural arrangement, the plurality of welding teeth can almost simultaneously come into contact with and press against the to-be-welded workpiece, especially for a to-be-welded workpiece with higher hardness, the deformation of the to-be-welded workpiece is small, allowing the to-be-welded workpiece to receive a more balanced pressing force from the welding head.

In some embodiments, any two adj acent welding teeth on the welding mark end surface are spaced apart.

With the above structural arrangement, the number of welding teeth can be reduced, facilitating the processing and manufacture. Moreover, when the welding teeth press against the to-be-welded workpiece, the deformation of the to-be-welded workpiece caused by pressing can be reduced, thereby better protecting the to-be-welded workpiece.

In some embodiments, an end of each of the welding teeth close to the welding mark end surface is a tooth root, where a joint between a surface of the tooth root and the welding mark end surface is a smooth curved surface.

The above structural arrangement can reduce stress concentration at a contact position between the edge of the tooth root and the welding mark end surface so as to ensure the structural strength of the connection between the welding teeth and the welding mark end surface. Moreover, when the welding teeth and the welding mark end surface press against the to-be-welded workpiece, edges on the to-be-welded workpiece can be reduced, thereby better ensuring the structural strength of the to-be-welded workpiece.

In some embodiments, a region of the welding mark end surface between two adjacent welding teeth is recessed into an arc surface, where the arc surface is tangent to an edge of the tooth root.

The above structural arrangement can better reduce the stress concentration at the contact position between the edge of the tooth root and the welding mark end surface so as to ensure the structural strength of the connection between the welding teeth and the welding mark end surface.

In some embodiments, the plurality of welding teeth are arranged in rows and columns on the welding mark end surface.

The above structural arrangement can facilitate the design and layout of the welding teeth and facilitate the processing and manufacture of the welding teeth.

In some embodiments, edges of two ends of the welding head in the first direction are each provided with a first rounded corner; and/or, edges of two ends of the welding head perpendicular to the third direction are each provided with a second rounded corner; where the third direction is perpendicular to the first direction, and the third direction is perpendicular to the second direction.

With the above structural arrangement, the edges of the two ends of the welding head in the first direction are each provided with a first rounded corner, and when the welding mark end surface presses against the to-be-welded workpiece, contact stress between the two ends of the welding mark end surface in the first direction and the to-be-welded workpiece can be reduced, thereby better protecting the to-be-welded workpiece. Arranging the second rounded corners at the edges of the two ends of the welding head in the third direction can reduce contact stress between the two ends of the welding mark end surface in the third direction and the to-be-welded workpiece, thereby better protecting the to-be-welded workpiece.

In some embodiments, the welding teeth are in one or several of a partially-spherical shape, a truncated cone shape, and a pyramidal shape.

The above structural arrangement can facilitate the design and layout of the welding teeth. Setting the welding teeth in a partially-spherical shape can reduce the contact stress on the to-be-welded workpiece and reduce damage to the to-be-welded workpiece. Setting the welding teeth in a truncated cone shape can better press against the to-be-welded workpiece and reduce contact stress of a peripheral side of the welding teeth on the to-be-welded workpiece. Setting the welding teeth in a pyramidal shape can better fix the to-be-welded workpiece.

In some embodiments, the processing mechanism further includes a supporting body, where the welding head is mounted on the supporting body.

With the above structural arrangement, the supporting body is provided to support the welding head, facilitating mounting and fixation of the welding head and facilitating the use of the welding head.

According to a second aspect, an embodiment of this application provides an ultrasonic welding apparatus including the processing mechanism as described in the above embodiments.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BENEFICIAL EFFECTS

### BRIEF DESCRIPTION OF DRAWINGS

To describe the technical solutions in the embodiments of this application more clearly, the following briefly describes the accompanying drawings required for describing the embodiments or demonstrative technical description. Apparently, the accompanying drawings in the following description show merely some embodiments of this application, and persons of ordinary skill in the art may still derive other drawings from these accompanying drawings without creative efforts.
FIG. 1 is a schematic three-dimensional structural diagram of an ultrasonic welding apparatus according to some embodiments of this application;
FIG. 2 is a schematic structural side view of an ultrasonic welding apparatus according to some embodiments of this application;
FIG. 3 is a schematic three-dimensional structural diagram of a processing mechanism according to some embodiments of this application;
FIG. 4 is a schematic three-dimensional structural diagram of a welding head portion of the processing mechanism shown in FIG. 3;
FIG. 5 is a schematic structural side view of the welding head portion shown in FIG. 4;
FIG. 6 is a schematic structural diagram of a welding head portion of a processing mechanism according to some other embodiments of this application;
FIG. 7 is a schematic structural diagram of a welding head portion of a processing mechanism according to still some other embodiments of this application;
FIG. 8 is a schematic structural diagram of a welding head portion of a processing mechanism according to yet some other embodiments of this application;
FIG. 9 is a schematic structural diagram of a welding head portion of a processing mechanism according to some embodiments of this application;
FIG. 10 is a schematic structural diagram of a welding head portion of a processing mechanism according to still some other embodiments of this application;
FIG. 11 is a schematic structural diagram of a welding head portion of a processing mechanism according to yet some other embodiments of this application;
FIG. 12 is a schematic structural diagram of a welding head portion of a processing mechanism according to still yet some other embodiments of this application;
FIG. 13 is a schematic structural diagram of a welding tooth of a processing mechanism according to some embodiments of this application;
FIG. 14 is a schematic structural diagram of a welding tooth of a processing mechanism according to some other embodiments of this application;
FIG. 15 is a schematic structural diagram of a welding tooth of a processing mechanism according to still some other embodiments of this application; and
FIG. 16 is a schematic structural diagram of a welding tooth of a processing mechanism according to yet some other embodiments of this application.

Major reference signs in the figures:
100. ultrasonic welding apparatus;
10. processing mechanism; 11. welding head; 110. intermediate plane; 111. welding mark end surface; 1111. first region; 1112. second region; 112. first rounded corner; 113. second rounded corner; 12. welding teeth; 121. far point; 122. far surface; 123. far end point; 124. far end surface; 125. tooth root; 13. supporting body;
21. welding holder; 22. base;
30. to-be-welded workpiece; 31. welding mark region;
X. first direction; Z. second direction; and Y third direction.

### DESCRIPTION OF EMBODIMENTS

To make the technical problems to be solved, technical solutions, and beneficial effects of this application more comprehensible, the following describes this application in detail with reference to accompanying drawings and embodiments. It should be understood that the specific embodiments described herein are merely used to explain this application but are not intended to limit this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence or primary-secondary relationship of the technical features indicated. Therefore, a feature limited by "first" or "second" may explicitly or implicitly include one or more such features.

In this specification, reference to "embodiment" means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with another embodiment in any suitable manner.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces. "Several" means one or more unless otherwise specifically stated.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on the embodiments of this application.

In the description of the embodiments of this application, unless otherwise expressly specified and defined, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

In the description of the embodiments of this application, unless otherwise expressly specified and defined, when a component is referred to as being "fastened to" or "disposed on" another component, it may be directly on the another component, or may be indirectly on the another component. When a component is referred to as being "connected to" another component, it may be directly connected to the another component, or may be indirectly connected to the another component.

In the description of the embodiments of this application, unless otherwise expressly specified and defined, the technical term "adjacent" means being adjacent in position. For example, when there are three components A₁, A₂, and B, if the distance between A₁ and B is greater than the distance between A₂ and B, A₂ is closer to B compared to A₁. In other words, A₂ is adjacent to B, and it can also be said that B is adjacent to A₂. For another example, when there are a plurality of components C, and the plurality of components C are denoted as C₁, C₂, ..., and C_{N}, if one of the components C, such as C₂, is closer to component B compared to other components C, B is adjacent to C₂, and it can also be said that C₂ is adjacent to B.

The cell mentioned in the embodiments of this application is also referred to as an electrode assembly, serving as a component for manufacturing a battery cell. The battery cell is a component for manufacturing a battery. That is, the battery refers to a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell. In some cases, the battery cell may also be used directly, that is, the battery may also not include a box. This is not limited herein.

In the embodiments of this application, the battery cell may be a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes. This is not limited in the embodiments of this application either. Battery cells are typically divided into three types by packaging method: cylindrical cells, prismatic cells, and pouch cells. This is not limited in the embodiments of this application either.

The battery cell in the embodiments of this application includes an electrode assembly. The electrode assembly includes a positive electrode plate, a negative electrode plate, and a separator. Working of the electrode assembly mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. A part of the positive electrode current collector uncoated with the positive electrode active substance layer protrudes out of a part of the positive electrode current collector coated with the positive electrode active substance layer. The part uncoated with the positive electrode active substance layer serves as a positive tab, or a metal conductor is welded to and led out of the positive electrode current collector to serve as the positive tab. A lithium-ion battery is used as an example, for which, the positive electrode current collector may be made of aluminum, and a positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A part of the negative electrode current collector uncoated with the negative electrode active substance layer protrudes out of a part of the negative electrode current collector coated with the negative electrode active substance layer. The part uncoated with the negative electrode active substance layer serves as a negative tab, or a metal conductor is welded to and led out of the negative electrode current collector to serve as the negative tab. The negative electrode current collector may be made of copper, and a negative electrode active substance may be carbon, silicon, or the like. To allow a large current to pass through without any fusing, a plurality of positive tabs are provided and stacked together, and a plurality of negative tabs are provided and stacked together. Typically, the positive tab and negative tab are collectively referred to as tabs.

To allow the battery cell to be powered on for use, an electrode terminal is usually provided on the battery cell. The electrode terminal is a conductive member on the battery cell, and the electrode terminal is connected to a tab of the electrode assembly to output electrical energy of the battery cell or charge the battery cell.

An adapting piece is a conductive sheet in the battery cell that connects the tab to the electrode terminal. To connect the electrode terminal to the tab, an adapting piece is usually provided. The adapting piece and tab are mostly connected by welding to ensure the stability of the connection between the adapting piece and the tabs thereby ensuring good conduction performance. This makes the welding effect between the adapting piece and the tab extremely important for the battery cell.

Ultrasonic welding, also known as ultrasonic wave welding, is a process in which an ultrasonic welding apparatus drives a welding head to drive to-be-welded workpieces to undergo ultrasonic reciprocating vibration so that heat is generated by mutual friction between the to-be-welded workpieces, and thus a contact position between the to-be-welded workpieces is heated up and fused and then welded together. Ultrasonic welding can be used for welding thin workpieces such as a foil material, for example, for welding a tab and an adapting piece.

However, when a workpiece with a small thickness is ultrasonically welded, cracks are likely to occur in a front portion or rear portion of a region where the to-be-welded workpiece is in contact with the welding head (that is, a welding mark region), and in severe cases, the to-be-welded workpiece may even be broken.

Especially for the welding of a tab and an adapting piece, since a region where the tab and the adapting piece are connected is a region through which the current passes (that is, a current flowing area), when cracks occurs in the front portion or rear portion of the welding mark region, the current area of the tab and adapting piece is affected, increasing the internal resistance and affecting the performance of the cell, and disconnection between the front portion or rear portion of a welded region of the tab and adapting piece causes direct failure of the cell.

According to the above problems, the inventors of this application have found through research that during ultrasonic welding, the welding head needs to drive the to-be-welded workpiece to undergo reciprocating vibration, which requires the to-be-welded workpiece to be supported on a welding holder during welding, so that the welding mark end surface of the welding head presses against the to-be-welded workpiece to drive the to-be-welded workpiece to undergo reciprocating vibration. When driving the to-be-welded workpiece to undergo reciprocating vibration, the welding head is also subjected to a reverse acting force of the to-be-welded workpiece. Due to this reverse acting force, the welding head experiences forward or backward oblique deformation along the reciprocating vibration direction, causing the welding mark end surface on the welding head to be inclined forwards or backwards as well along the reciprocating vibration direction. Thus, an end portion of the welding mark end surface in the reciprocating vibration direction presses the to-be-welded workpiece towards the welding holder. However, a current welding mark end surface is generally a plane. Therefore, when an end portion of the welding mark end surface in the reciprocating vibration direction presses the to-be-welded workpiece, the front portion or rear portion of the welding mark region is recessed towards the welding holder to generate larger deformation. For a to-be-welded workpiece with a small thickness, such as welding of a tab and an adapting piece of a cell, such pressing is likely to cause cracks in the front portion or rear portion of a region where the to-be-welded workpiece is in contact with the welding head (that is, the welding mark region), and in severe cases, the to-be-welded workpiece may even be broken.

Based on the above findings, an embodiment of this application provides a processing mechanism. A welding mark end surface on a welding head of the processing mechanism is set as an arch shape with the middle portion protruding along a reciprocating vibration direction. In this way, when the welding head is inclined forwards or backwards along the reciprocating vibration direction, the bending of two ends of the welding mark end surface can reduce the pressing force on the to-be-welded workpiece, reducing or avoiding the risk of cracks occurring in the front portion or rear portion of the welding mark region on the to-be-welded workpiece, thereby effectively preventing the to-be-welded workpiece from being broken due to the pressing of the welding mark end surface.

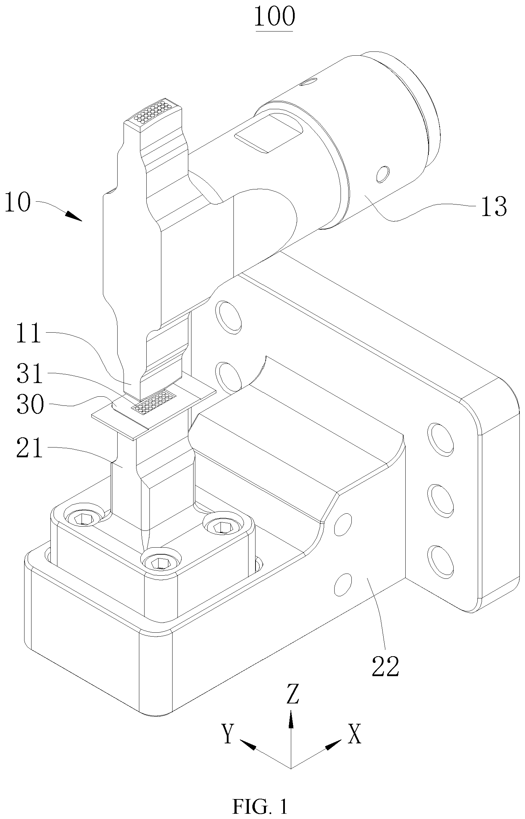

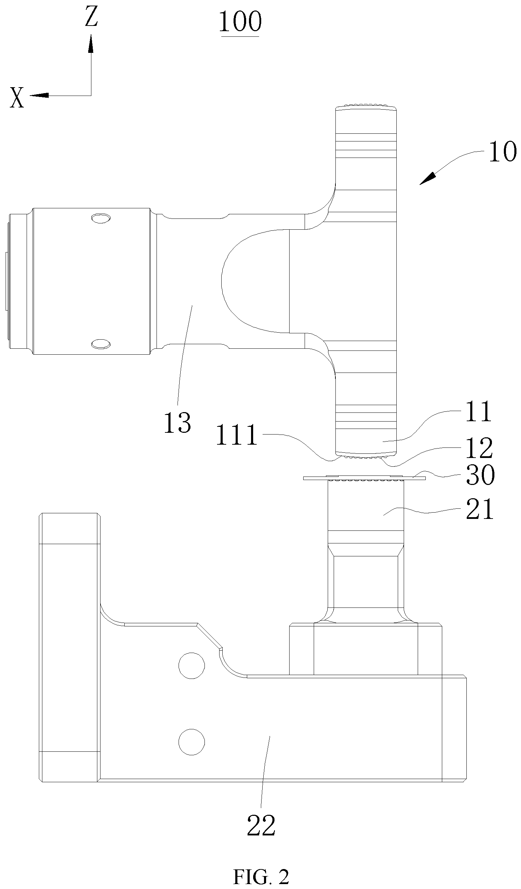

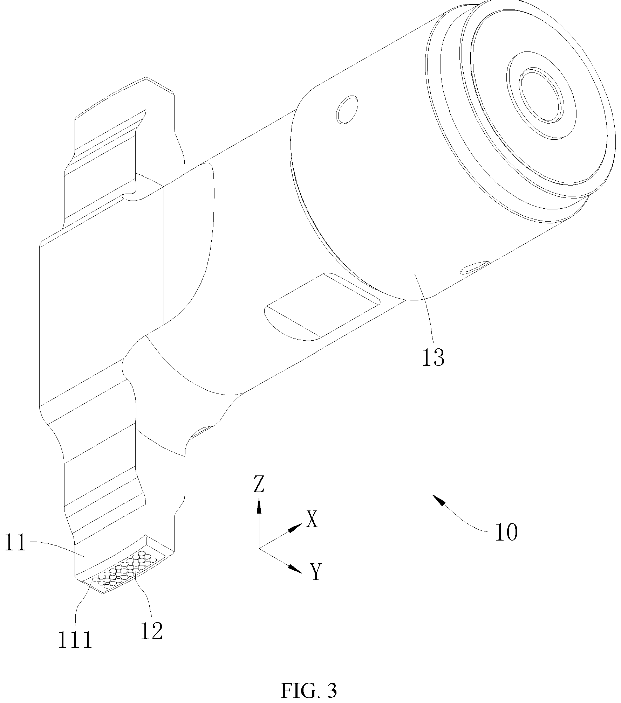

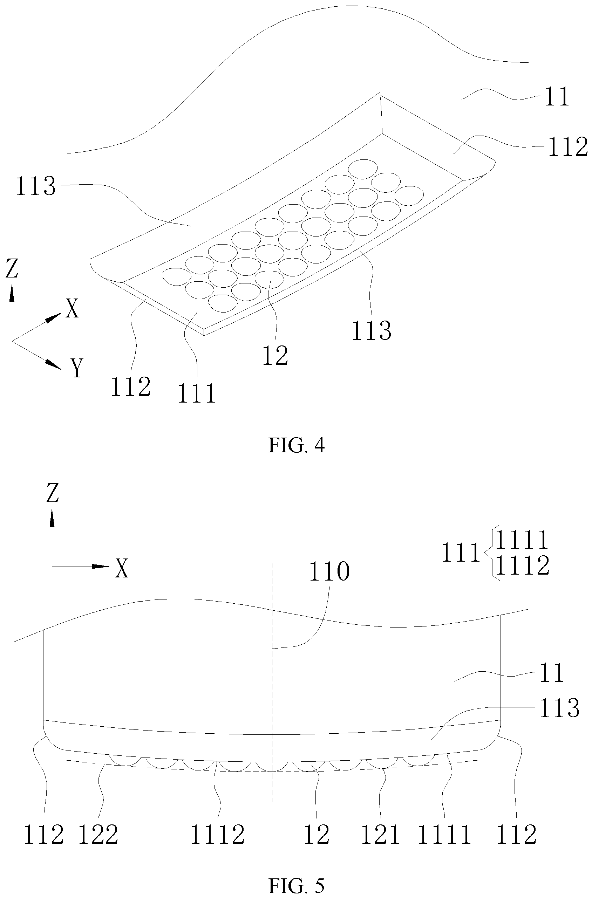

Referring to FIG. 1 to FIG. 5, FIG. 1 is a schematic three-dimensional structural diagram of an ultrasonic welding apparatus according to some embodiments of this application. FIG. 2 is a schematic structural side view of an ultrasonic welding apparatus according to some embodiments of this application. FIG. 3 is a schematic three-dimensional structural diagram of a processing mechanism according to some embodiments of this application. FIG. 4 is a schematic three-dimensional structural diagram of a welding head portion of a processing mechanism according to some embodiments of this application. FIG. 5 is a schematic structural side view of a welding head portion according to some embodiments of this application.

An ultrasonic welding apparatus 100 includes a welding holder 21 and a processing mechanism 10. The welding holder 21 is a component for supporting a to-be-welded workpiece 30. The processing mechanism 10 is a component that presses the to-be-welded workpiece 30 against the welding holder 21 and drives the to-be-welded workpiece 30 to undergo reciprocating vibration for welding. During use, the to-be-welded workpiece 30 is placed between the welding holder 21 and the processing mechanism 10, the processing mechanism 10 presses the to-be-welded workpiece 30 against the welding holder 21, and the processing mechanism 10 undergoes reciprocating vibration to drive the to-be-welded workpiece 30 to undergo reciprocating vibration, so that the to-be-welded workpieces 30 are welded together by heat generated by friction therebetween.

In some embodiments, the ultrasonic welding apparatus 100 further includes a base 22, the welding holder 21 is mounted on the base 22, and the base 22 is configured to support and position the welding holder 21, facilitating the mounting and fixation of the welding holder 21.

Referring to FIG. 1 and FIG. 3 to FIG. 5, the processing mechanism 10 includes a welding head 11, and during welding, the welding head 11 presses against the to-be-welded workpiece 30 to drive the to-be-welded workpiece 30 to undergo reciprocating vibration.

For convenience of description, it is defined that a reciprocating movement direction in which the welding head 11 drives the to-be-welded workpiece 30 to undergo reciprocating vibration is the first direction such as a direction X shown in the figure. In other words, the welding head 11 and the to-be-welded workpiece 30 undergo reciprocating vibration in the first direction. A direction from the welding head 11 to the welding holder 21 is defined as the second direction such as a direction Z shown in the figure, and accordingly, the second direction is also a length direction of the welding head 11, that is, the direction Z is the length direction of the welding head 11. A third direction is defined as a direction Y in the figure, the third direction is perpendicular to the first direction, and the third direction is perpendicular to the second direction.

The welding head 11 has a welding mark end surface 111 at an end in the second direction, and during welding, the welding mark end surface 111 presses against the to-be-welded workpiece 30. In other words, the welding mark end surface 111 is a side of the welding head 11 close to the to-be-welded workpiece 30.

The welding mark end surface 111 is provided with a plurality of welding teeth 12. In other words, the processing mechanism 10 further includes a plurality of welding teeth 12, and the plurality of welding teeth 12 are distributed on the welding mark end surface 111. The welding teeth 12 are arranged on the welding mark end surface 111. When the welding head 11 presses against the to-be-welded workpiece 30, the welding teeth 12 can press into the to-be-welded workpiece 30 to increase a friction force between the welding head 11 and the to-be-welded workpiece 30, thereby fixing the to-be-welded workpiece 30 and driving the to-be-welded workpiece 30 to undergo reciprocating vibration.

The welding mark end surface 111 is in an arch shape. Specifically, a middle portion of the welding mark end surface 111 in the first direction X protrudes, so that the welding mark end surface 111 is curved in an arch shape. The middle portion of the welding mark end surface 111 in the first direction X refers to a region on the welding mark end surface 111 close to the middle of the welding mark end surface 111 in the first direction X. The middle portion of the welding mark end surface 111 in the first direction X protrudes away from a middle portion of the welding head 11 in a length direction. In other words, during use, the middle portion of the welding mark end surface 111 in the first direction X protrudes towards the to-be-welded workpiece 30, and two ends of the welding mark end surface 111 in the first direction X are curved away from the to-be-welded workpiece 30. This ensures that when the welding mark end surface 111 moves towards the to-be-welded workpiece 30, the middle portion of the welding mark end surface 111 in the first direction X first presses against the to-be-welded workpiece 30; and when the welding mark end surface 111 presses against the to-be-welded workpiece 30, an acting force of the two ends of the welding mark end surface 111 in the first direction X pressing against the to-be-welded workpiece 30 is smaller than an acting force of the middle portion of the welding mark end surface 111 in the first direction X pressing against the to-be-welded workpiece 30. When the welding head 11 drives the to-be-welded workpiece 30 to undergo reciprocating vibration in the first direction X, the to-be-welded workpiece 30 generates a reverse acting force on the welding head 11 due to friction. Under the action of this reverse acting force, the welding head 11 is inclined forwards or backwards to deform in the first direction X, causing the welding mark end surface 111 to be inclined forwards or backwards in the first direction X as well. Since the welding mark end surface 111 is in an arch shape, and the two ends of the welding mark end surface 111 in the first direction X are curved away from the to-be-welded workpiece 30, when the welding mark end surface 111 is inclined forwards or backwards in the first direction X, a pressing force of the two ends of the welding mark end surface 111 in the first direction X on the to-be-welded workpiece 30 is not too large, thereby effectively protecting the to-be-welded workpiece 30 and avoiding or reducing the risk of cracks occurring in the front portion or rear portion of the welding mark region 31 on the to-be-welded workpiece 30.

In the technical solution of the embodiments of this application, the welding mark end surface 111 of the welding head 11 is in an arch shape so that the middle portion of the welding mark end surface 111 in the first direction X protrudes. Thus, when the welding mark end surface 111 presses against the to-be-welded workpiece 30 and drives the to-be-welded workpiece 30 to undergo reciprocating vibration in the first direction X, if the welding mark end surface 111 is inclined due to the friction force, the front portion or rear portion of the welding mark end surface 111 in the reciprocating vibration direction being curved away from the to-be-welded workpiece 30 can reduce a pressing force of the front portion or rear portion of the welding mark end surface 111 in the reciprocating vibration direction on the to-be-welded workpiece 30, avoiding or reducing the risk of cracks occurring in the front portion or rear portion of the welding mark region 31, thereby effectively protecting the to-be-welded workpiece 30 and reducing the risk of the to-be-welded workpiece 30 being broken due to the pressing of the welding mark end surface 111.

In some embodiments, referring to FIG. 1 to FIG. 3, the processing mechanism 10 further includes a supporting body 13, and the welding head 11 is mounted on the supporting body 13. The supporting body 13 is configured to fix and support the welding head 11 and to connect other components of the ultrasonic welding apparatus 100. The supporting body 13 is provided to support the welding head 11, thereby facilitating mounting and fixation of the welding head 11 and facilitating the use of the welding head 11.

In some embodiments, the welding head 11 and the supporting body 13 are integrally formed structures, thereby facilitating the processing and manufacture and ensuring the firmness of the connection between the welding head 11 and the supporting body 13. It can be understood that the welding head 11 and the supporting body 13 may alternatively be manufactured separately and then fixedly connected.

In some embodiments, the welding head 11 is arranged on a side surface of the supporting body 13 in the length direction to reduce the overall height of the processing mechanism 10. It can be understood that the welding head 11 may alternatively be arranged on an end surface of the supporting body 13 in the length direction.

In some embodiments, the welding head 11 is arranged on two opposite sides of the supporting body 13 in the length direction to facilitate replacement of the welding head 11. It can be understood that a plurality of side surfaces of the supporting body 13 in the length direction may each be provided with the welding head 11. In other words, when the welding head 11 is arranged on the side surface of the supporting body 13 in the length direction, the welding head 11 may also be arranged on one or several other side surfaces, which is not limited herein.

In some embodiments, a cross section of the welding mark end surface 111 parallel to the first direction X is in an arc shape. This makes the overall welding mark end surface 111 be in an arc shape, thereby facilitating the processing and manufacture. Since there are no edges on the arc-shaped welding mark end surface 111, when the welding mark end surface 111 presses against the to-be-welded workpiece 30, no edges are formed in the welding mark region 31 of the to-be-welded workpiece 30 due to the pressing of the welding mark end, thereby avoiding the problem of cracking of the to-be-welded workpiece 30 caused by the pressing of the edges.

In some embodiments, the cross section of the welding mark end surface 111 parallel to the first direction X may also be set in a smooth curve shape. In other words, the cross section of the welding mark end surface 111 parallel to the first direction X is set in a curve shape. The curve may be formed by connecting a plurality of arc segments. This can also reduce the edges of the welding mark end surface 111 that are in contact with the to-be-welded workpiece 30, thereby avoiding the problem of cracking of the to-be-welded workpiece 30 caused by the pressing of the edges.

For convenience of description, it is defined that a plane passing through the middle portion of the welding head 11 in the first direction X and perpendicular to the first direction X is an intermediate plane 110. In other words, the first direction X is the normal direction of the intermediate plane 110, and the intermediate plane 110 is in the middle of the welding head 11 in the first direction X. Portions of two opposite sides of the welding mark end surface 111 on the intermediate plane 110 are respectively a first region 1111 and a second region 1112. In other words, the two opposite sides of the welding mark end surface 111 on the intermediate plane 110 are respectively the first region 1111 and the second region 1112.

In some embodiments, referring to FIG. 5, the first region 1111 and the second region 1112 are symmetrically arranged with respect to the intermediate plane 110 to facilitate manufacture. When the welding mark end surface 111 presses against the to-be-welded workpiece 30, pressing forces of the first region 1111 and the second region 1112 on the to-be-welded workpiece 30 may be equal or approximately the same, so that the pressing forces of the welding mark end surface 111 on the two ends of the to-be-welded workpiece 30 in the first direction X are balanced, allowing the to-be-welded workpiece 30 to be welded more uniformly and firmly, thereby improving the welding effect.

For convenience of description, it is defined that points on the welding teeth 12 that are farthest from the welding mark end surface 111 in a direction perpendicular to the welding mark end surface 111 are far points 121. In other words, points on the welding teeth 12 with the largest distance from the welding mark end surface 111 are far points 121. A surface on which a plurality of far points 121 are located is a far surface 122. The far surface 122 reflects a height setting situation of the welding teeth 12 on the welding mark end surface 111 that protrude from the welding mark end surface 111.

In some embodiments, referring to FIG. 5, a middle portion of the far surface 122 in the first direction X protrudes, so that the far surface 122 is curved in an arch shape. In other words, the far surface 122 is in an arch shape. Specifically, the middle portion of the far surface 122 in the first direction X protrudes, so that the far surface 122 is curved in an arch shape. The middle portion of the far surface 122 in the first direction X protrudes away from the middle portion of the welding head 11 in the length direction. In other words, during use, the middle portion of the far surface 122 in the first direction X protrudes towards the to-be-welded workpiece 30, and two ends of the far surface 122 in the first direction X are curved away from the to-be-welded workpiece 30. Therefore, when the welding mark end surface 111 and the welding teeth 12 press against the to-be-welded workpiece 30, depths that the welding teeth 12 press into the to-be-welded workpiece 30 are approximately the same, so that a pressing force of the welding teeth 12 on the to-be-welded workpiece 30 is balanced, thereby allowing the welding mark end surface 111 and the welding teeth 12 to better drive the to-be-welded workpiece 30 to undergo reciprocating vibration.

In some embodiments, referring to FIG. 5, the far surface 122 is parallel to the welding mark end surface 111. This can make distances from the welding teeth 12 to the welding mark end be approximately the same, facilitating the design, processing, and manufacture of the welding teeth 12. In addition, when the welding mark end surface 111 and the welding teeth 12 press against the to-be-welded workpiece 30, distances that the welding teeth 12 press into the to-be-welded workpiece 30 are approximately the same, making an acting force of the welding teeth 12 on the to-be-welded workpiece 30 be balanced, thereby allowing the welding mark end surface 111 and the welding teeth 12 to better drive the to-be-welded workpiece 30 to undergo reciprocating vibration.

In some embodiments, referring to FIG. 5, heights of portions of the welding teeth 12 protruding from the welding mark end surface 111 are equal, facilitating the design, processing, and manufacture of the welding teeth 12. In addition, when overall the welding mark end surface 111 presses against the to-be-welded workpiece 30, the distances that the welding teeth 12 press into the to-be-welded workpiece 30 are approximately equal, making the acting force of the welding teeth 12 on the to-be-welded workpiece 30 more balanced, thereby allowing the welding mark end surface 111 and the welding teeth 12 to better drive the to-be-welded workpiece 30 to undergo reciprocating vibration.

In some embodiments, the plurality of welding teeth 12 are arranged in rows and columns on the welding mark end surface 111. In other words, the welding teeth 12 on the welding mark end surface 111 are arranged in rows and columns, facilitating the design and layout of the welding teeth 12 and facilitating the processing and manufacture of the welding teeth 12.

In some embodiments, the plurality of welding teeth 12 may be arranged in columns along the first direction X, and the plurality of welding teeth 12 are arranged in rows along the third direction Y, facilitating the manufacture. It can be understood that the plurality of welding teeth 12 may alternatively be arranged in columns along a direction oblique to the first direction X.

In some embodiments, the plurality of welding teeth 12 may be arranged in an array on the welding mark end surface 111, so that the plurality of welding teeth 12 are evenly distributed on the welding mark end surface 111, facilitating the design and layout of the welding teeth 12. In addition, when the welding teeth 12 press against the to-be-welded workpiece 30, a pressing force applied from the welding teeth 12 to the welding mark region 31 of the to-be-welded workpiece 30 can be more uniform, achieving uniform welding strength of the welding mark region 31, and improving the welding effect.

In some embodiments, the plurality of welding teeth 12 may alternatively be distributed on the welding mark end surface 111 dispersedly. In other words, the plurality of welding teeth 12 are unevenly distributed on the welding mark end surface 111, for example, discretely distributed on the welding mark end surface 111, so that the welding teeth 12 can press against the predetermined positions on the to-be-welded workpiece 30 more easily, ensuring the welding effect at the predetermined positions on the to-be-welded workpiece 30.

In some embodiments, edges of two ends of the welding head 11 in the first direction X are each provided with a first rounded corner 112. In other words, the edges of the two ends of the welding mark end surface 111 in the first direction X are in smooth transition with adjacent side surfaces of the welding head 11 through the first rounded corners 112. Thus, when the welding mark end surface 111 presses against the to-be-welded workpiece 30, contact stress between the edges of the two ends of the welding mark end surface 111 in the first direction X and the to-be-welded workpiece 30 can be reduced, thereby better protecting the to-be-welded workpiece 30.

In some embodiments, edges of two ends of the welding head 11 in a direction perpendicular to the first direction X and the length direction of the welding head 11 are each provided with a second rounded corner 113. In other words, the edges of the two ends of the welding mark end surface 111 in the third direction Y are in smooth transition with adjacent side surfaces of the welding head 11 through the second rounded corners 113. Thus, when the edges of the two ends of the welding head 11 in the direction perpendicular to the first direction X are each provided with the second rounded corner 113, contact stress between the edges of the two ends of the welding mark end surface 111 in the third direction Y and the to-be-welded workpiece 30 can be reduced, thereby better protecting the to-be-welded workpiece 30.

In some embodiments, a radius of the first rounded corner 112 is greater than a radius of the second rounded corner 113. The radius of the first rounded corner 112 is set to be larger, so that when the welding head 11 is inclined along the first direction X under the reverse acting force of the to-be-welded workpiece 30, a pressing force of the first rounded corner 112 on the to-be-welded workpiece 30 can be smaller. Setting the radius of the second rounded corner 113 to be smaller can reduce the volume of the welding head 11, making the ultrasonic vibration energy of the processing mechanism 10 more concentrated for welding, thereby facilitating welding.

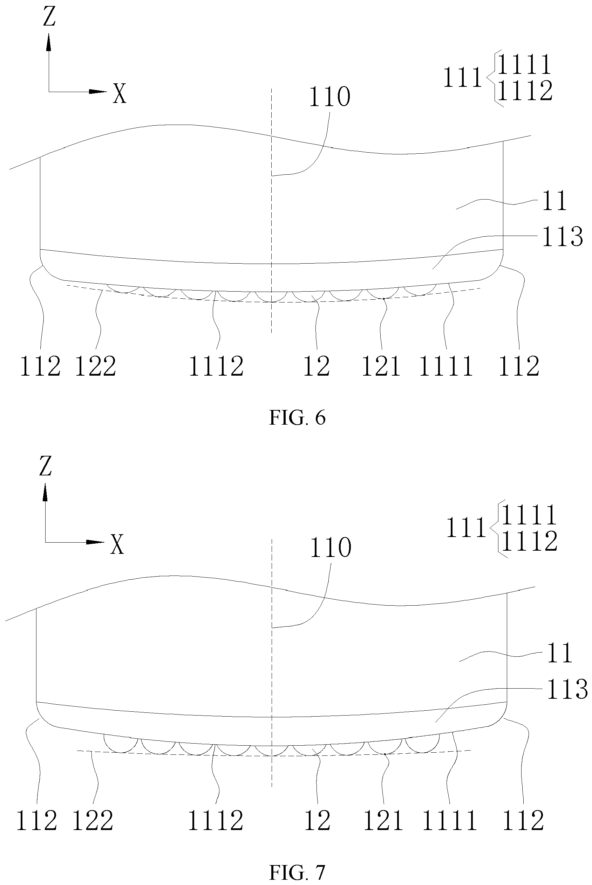

In some embodiments, referring to FIG. 6, FIG. 6 is a schematic structural diagram of a welding head 11 portion of a processing mechanism 10 according to some embodiments of this application. Heights of portions of the welding teeth 12 that protrude from the welding mark end surface 111 gradually decrease along the first direction X and along a direction from the middle portion to the two ends of the welding mark end surface 111. In other words, from the intermediate plane 110 to the two ends of the welding head 11, the heights of the portions of the welding teeth 12 that protrude from the welding mark end surface 111 gradually decrease. To be specific, in the direction from the middle portion to the two ends of the welding mark end surface 111 in the first direction, in any two welding teeth 12: a height of a portion of one welding tooth 12 close to the middle of the welding mark end surface 111 in the first direction X that protrudes from the welding mark end surface 111 is less than a height of a portion of the other welding tooth 12 that protrudes from the welding mark end surface 111, that is, for two sides of the welding mark end surface 111 in the first direction X on the intermediate plane 110, such as the welding teeth 12 on the first region 1111 and the welding teeth 12 on the second region 1112, in any two welding teeth 12: a height of a portion of one welding tooth 12 close to the intermediate plane 110 that protrudes from the welding mark end surface 111 is less than a height of a portion of the other welding tooth 12 away from the intermediate plane 110 that protrudes from the welding mark end surface 111. In this way, two ends of the far surface 122 gradually bend towards the welding mark end surface 111 from the intermediate plane 110 to the welding head 11, so that when the welding mark end surface 111 presses against the to-be-welded workpiece 30, if the welding head 11 is inclined due to vibration, pressing of the welding teeth 12 on the to-be-welded workpiece 30 with inclination of the welding head 11 can be reduced, thereby better avoiding or reducing the risk of cracks occurring in the front portion or rear portion of the welding mark region 31.

In some embodiments, referring to FIG. 7, FIG. 7 is a schematic structural diagram of a welding head 11 portion of a processing mechanism 10 according to some embodiments of this application. The heights of the portions of the welding teeth 12 that protrude from the welding mark end surface 111 gradually increase in the first direction X and in a direction from the middle portion to the two ends of the welding mark end surface 111. In other words, from the intermediate plane 110 to the two ends of the welding head 11, the heights of the portions of the welding teeth 12 that protrude from the welding mark end surface 111 gradually increase. To be specific, in the direction from the middle portion to the two ends of the welding mark end surface 111 in the first direction X, in any two welding teeth 12: a height of a portion of one welding tooth 12 close to the middle of the welding mark end surface 111 in the first direction X that protrudes from the welding mark end surface 111 is greater than a height of a portion of the other welding tooth 12 that protrudes from the welding mark end surface 111, that is, for two sides of the welding mark end surface 111 in the first direction X on the intermediate plane 110, such as the welding teeth 12 on the first region 1111 and the welding teeth 12 on the second region 1112, in any two welding teeth 12: a height of a portion of one welding tooth 12 close to the intermediate plane 110 that protrudes from the welding mark end surface 111 is greater than a height of a portion of the other welding tooth 12 away from the intermediate plane 110 that protrudes from the welding mark end surface 111. This also makes the distance from the far surface 122 to the welding mark end surface 111 gradually increase from the intermediate plane 110 to the two ends of the welding head 11. When the welding mark end surface 111 presses against the to-be-welded workpiece 30, the welding teeth 12 at the end portions can press more into the to-be-welded workpiece 30, increasing the pressing force on the welding mark region 31 of the to-be-welded workpiece 30, thereby stabilizing the to-be-welded workpiece 30 and better driving the to-be-welded workpiece 30 to undergo reciprocating vibration.

For convenience of description, it is defined that points on the welding teeth 12 that are farthest from the welding mark end surface 111 in the second direction Z are far end points 123. In other words, the far end points 123 on the welding teeth 12 are points with the largest distance from the welding mark end surface 111 in the second direction Z. A surface on which a plurality of far end points 123 are located is a far end surface 124. The far end surface 124 can reflect a distance situation between the welding teeth 12 on the welding mark end surface 111 and the to-be-welded workpiece 30.

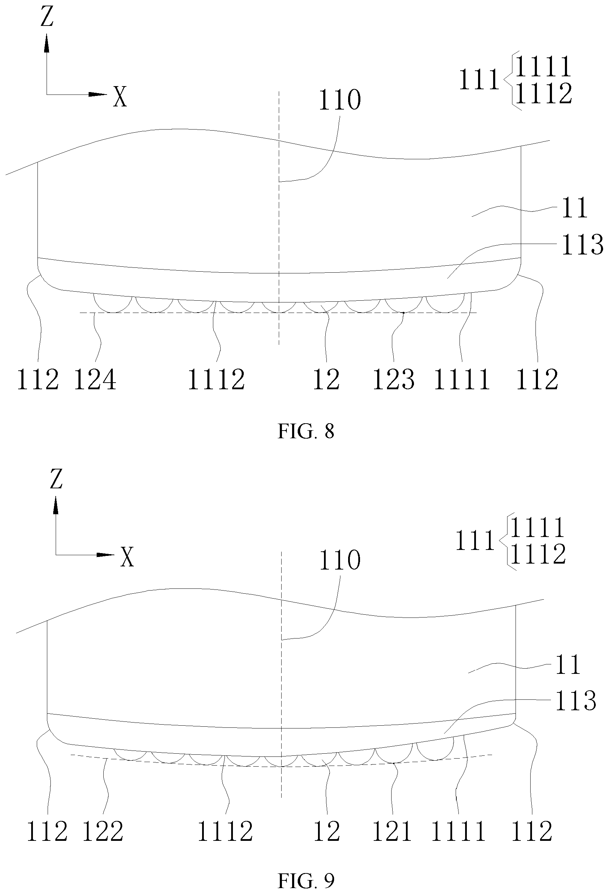

In some embodiments, referring to FIG. 8, FIG. 8 is a schematic structural diagram of a welding head 11 portion of a processing mechanism 10 according to some embodiments of this application. The far end surface 124 is a plane, and the second direction Z is perpendicular to the far end surface 124. This ensures that when the welding head 11 approaches the to-be-welded workpiece 30, the plurality of welding teeth 12 may come into contact with and press against the to-be-welded workpiece 30 almost simultaneously. Especially for a to-be-welded workpiece 30 with large hardness, the deformation of the to-be-welded workpiece 30 is small, making the pressing force of the welding head 11 on the to-be-welded workpiece 30 more balanced.

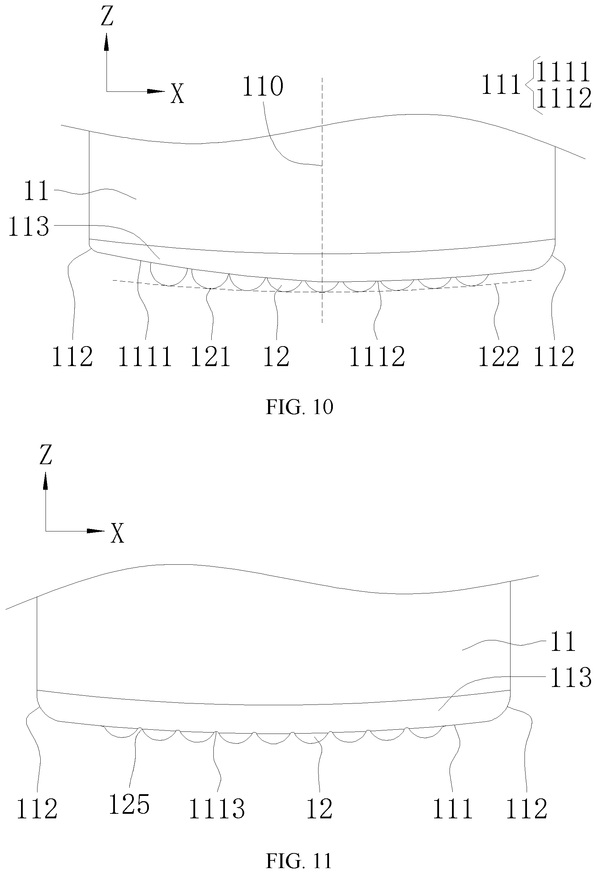

Referring to FIG. 9 and FIG. 10, FIG. 9 is a schematic structural diagram of a welding head 11 portion of a processing mechanism 10 according to some embodiments of this application. FIG. 10 is a schematic structural diagram of a welding head 11 portion of a processing mechanism 10 according to some other embodiments of this application.

In some embodiments, referring to FIG. 9 and FIG. 10, a bending amplitude of the first region 1111 is greater than a bending amplitude of the second region 1112. The bending amplitude of the first region 1111 refers to a curvature of bending from the intermediate plane 110 to an end portion of the first region 1111 along the first direction X and toward the middle portion of the welding head 11 in the length direction. The bending amplitude of the second region 1112 refers to a curvature of bending from the intermediate plane 110 to an end portion of the second region 1112 along the first direction X and toward the middle portion of the welding head 11 in the length direction. The bending amplitude of the first region 1111 is greater than the bending amplitude of the second region 1112, meaning that in the direction from the intermediate plane 110 to the two ends of the welding mark end surface 111 in the first direction X, the curvature of bending deformation of the first region 1111 is greater than the curvature of bending deformation of the second region 1112. For a case in which the welding head 11 is likely to be inclined towards the second region 1112 during welding, setting the bending amplitude of the first region 1111 to be greater than the bending amplitude of the second region 1112 can reduce the pressing force of the two ends of the welding mark end surface 111 in the first direction X on the to-be-welded workpiece 30, thereby effectively protecting the to-be-welded workpiece 30 and avoiding or reducing the risk of cracks occurring in the front portion or rear portion of the welding mark region 31. In addition, for a to-be-welded workpiece 30 with uneven thickness, a thicker side of the to-be-welded workpiece 30 can be placed at a corresponding position of the first region 1111, so that the pressing force applied from the welding mark end surface 111 to the to-be-welded workpiece 30 can be more balanced, allowing the to-be-welded workpiece 30 to be welded more uniformly and firmly.

In some embodiments, referring to FIG. 9, the first region 1111 is located on a front side of the intermediate plane 110 in the first direction X, while the second region 1112 is located on a rear side of the intermediate plane 110 in the first direction X.

In some embodiments, referring to FIG. 10, the first region 1111 is located on the rear side of the intermediate plane 110 in the first direction X, while the second region 1112 is located on the front side of the intermediate plane 110 in the first direction X.

In some embodiments, referring to FIG. 11, FIG. 11 is a schematic structural diagram of a welding head 11 portion of a processing mechanism 10 according to some embodiments of this application. Any two welding teeth 12 on the welding mark end surface 111 are spaced apart. This can reduce the number of the welding teeth 12 arranged on the welding mark end surface 111 to facilitate the manufacture, and can reduce the deformation of the to-be-welded workpiece 30 caused by pressing when the welding teeth 12 press against the to-be-welded workpiece 30, thereby better protecting the to-be-welded workpiece 30.

For convenience of description, it is defined that an end of the welding tooth 12 close to the welding mark end surface 111 is a tooth root 125. The tooth root 125 on the welding tooth 12 is fixedly connected to the welding mark end surface 111, so that the welding tooth 12 is fixed to the welding mark end surface 111.

In some embodiments, a joint between a surface of the tooth root 125 and the welding mark end surface 111 is a smooth curved surface. In other words, an edge of the tooth root 125 is in smooth transition with the welding mark end surface 111, making the surface of the tooth root 125 be connected to the welding mark end surface 111 in a smooth transition manner. This can reduce stress concentration at a contact position between the edge of the tooth root 125 and the welding mark end surface 111, thereby ensuring the structural strength of the connection between the welding teeth 12 and the welding mark end surface 111. In addition, when the welding teeth 12 and the welding mark end surface 111 press against the to-be-welded workpiece 30, edges on the to-be-welded workpiece 30 can be reduced, better ensuring the structural strength of the to-be-welded workpiece 30.

In some embodiments, referring to FIG. 11, a region of the welding mark end surface 111 between two adjacent welding teeth 12 is recessed into an arc surface 1113, and the arc surface 1113 is tangent to the edge of the tooth root 125. Such structure can better ensure that the edge of the tooth root 125 is in smooth transition with the welding mark end surface 111, reducing the stress concentration at the contact position between the edge of the tooth root 125 and the welding mark end surface 111, thereby ensuring the structural strength of the connection between the welding teeth 12 and the welding mark end surface 111.

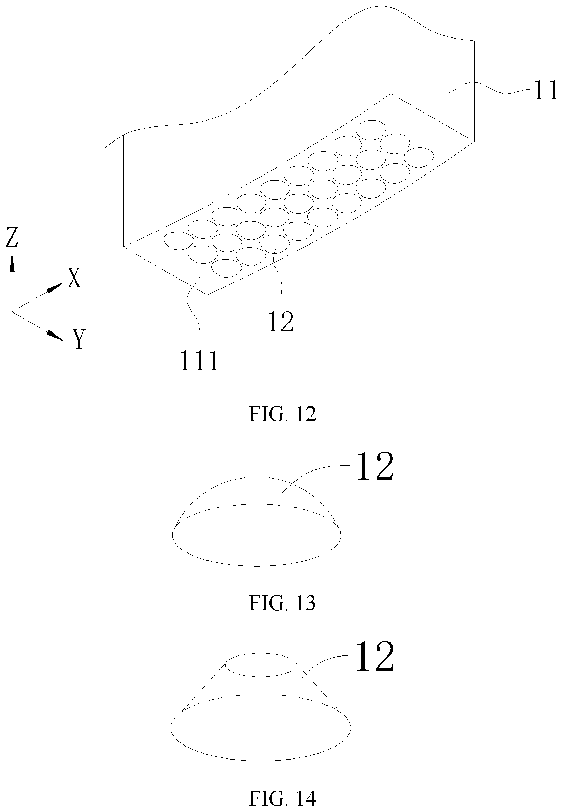

In some embodiments, referring to FIG. 12, the two ends of the welding mark end surface 111 in the first direction X may alternatively be transitioned to adjacent side surfaces through edges, thereby reducing the volume of the welding head 11. It can be understood that one end of the welding mark end surface 111 in the first direction X may alternatively be transitioned to an adjacent side surface through edges, while the other end of the welding mark end surface 111 in the first direction X is transitioned to an adjacent side surface through the first rounded corner 112.

In some embodiments, referring to FIG. 12, two ends of the welding mark end surface 111 in the third direction Y may also be transitioned to adjacent side surfaces through edges, thereby reducing the volume of the welding head 11. It can be understood that one end of the welding mark end surface 111 in the third direction Y may alternatively be transitioned to an adjacent side surface through edges, while the other end of the welding mark end surface 111 in the third direction Y is transitioned to an adjacent side surface through the second rounded corner 113.

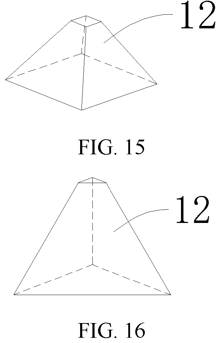

Referring to FIG. 13 to FIG. 16, FIG. 13 is a schematic structural diagram of a welding tooth 12 of a processing mechanism 10 according to some embodiments of this application. FIG. 14 is a schematic structural diagram of a welding tooth 12 of a processing mechanism 10 according to some other embodiments of this application. FIG. 15 is a schematic structural diagram of a welding tooth 12 of a processing mechanism 10 according to still some other embodiments of this application. FIG. 16 is a schematic structural diagram of a welding tooth 12 of a processing mechanism 10 according to yet some other embodiments of this application.

In some embodiments, referring to FIG. 13, the welding teeth 12 are in a partially-spherical shape. Referring to FIG. 12, in other words, a surface of the welding tooth 12 protruding from the welding mark end surface 111 is spherical. The welding teeth 12 may be hemispherical. Certainly, the welding tooth 12 may alternatively be a small hemisphere (that is, an overall volume of the welding tooth 12 is smaller than the shape of a hemisphere). It can be understood that the welding tooth 12 may alternatively be a large hemisphere (that is, an overall volume of the welding tooth 12 is larger than the shape of a hemisphere). The welding teeth 12 being in a partially-spherical shape can reduce contact stress on the to-be-welded workpiece 30 and reduce damage to the to-be-welded workpiece 30 when the to-be-welded workpiece 30 is pressed.

In some embodiments, referring to FIG. 14, the welding teeth 12 are in a truncated cone shape. Set in a truncated cone shape, the welding teeth 12 can better press against the to-be-welded workpiece 30, reducing contact stress caused by a peripheral side of the welding teeth 12 on the to-be-welded workpiece 30, thereby ensuring good structural strength of the welding teeth 12.

In some embodiments, referring to FIG. 15 and FIG. 16, the welding teeth 12 are in a pyramidal shape. As shown in FIG. 15, the welding teeth 12 are in a quadrangular pyramid shape. As shown in FIG. 16, the welding teeth 12 are in a triangular pyramid shape. In other words, a cross section of the tooth root 125 of the welding tooth 12 may be polygonal, such as triangular, quadrilateral, or pentagonal. Setting the welding teeth 12 in a pyramidal shape allows the to-be-welded workpiece 30 to be fixed better.

In some embodiments, among the plurality of welding teeth 12 on the welding mark end surface 111, some welding teeth 12 may be in a truncated cone shape, and some welding teeth 12 may be in a partially-spherical shape. Certainly, some welding teeth 12 may alternatively be in a truncated cone shape, and some welding teeth 12 may be in a pyramidal shape. Certainly, some welding teeth 12 may alternatively be in a partially-spherical shape, and some welding teeth 12 may be in a pyramidal shape. It can be understood that some welding teeth 12 may alternatively be in a partially-spherical shape, some welding teeth 12 may be in a truncated cone shape, and some welding teeth 12 may be in a pyramidal shape. In other words, the welding teeth 12 may be in one or several of a partially-spherical shape, a truncated cone shape, and a pyramidal shape. When the welding teeth 12 are in various shapes, the welding teeth 12 in various shapes can be combined to press and fix the to-be-welded workpiece 30, thereby ensuring the welding effect.

According to some embodiments of this application, this application further provides an ultrasonic welding apparatus 100 including the processing mechanism 10 according to any one of the foregoing solutions.

According to some embodiments of this application, a processing mechanism 10 is provided. The processing mechanism 10 includes a welding head 11, and the welding head 11 has a welding mark end surface 111 at an end, and the welding mark end surface 111 is provided with a plurality of welding teeth 12. The welding mark end surface 111 is curved in an arc surface, and the welding teeth 12 are distributed perpendicular to the welding mark end surface 111, which can offset the deformation of the welding head 11 along the vibration direction of the welding head 11 due to insufficient rigidity of the welding head. The arc surface design of the welding mark end surface 111 ensures that the contact area between the welding head 11 and the to-be-welded workpiece 30 can always remain the same or approximately the same during operation, thereby avoiding or reducing the risk of cracks occurring in the front portion or rear portion of the welding mark region 31 and reducing the risk of the to-be-welded workpiece 30 being broken due to pressing of the welding mark end surface 111.

In conclusion, it should be noted that the foregoing embodiments are merely for describing the technical solutions of this application rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manners. This application is not limited to the specific embodiments disclosed in this specification but includes all technical solutions falling within the scope of the claims.

## Claims

1. A processing mechanism, **characterized by** comprising:
a welding head, wherein the welding head has a welding mark end surface at an end in a second direction, and a middle portion of the welding mark end surface in a first direction protrudes away from the welding head, so that the welding mark end surface is curved in an arch shape; and
welding teeth, wherein a plurality of welding teeth are distributed on the welding mark end surface; wherein
the first direction is parallel to a reciprocating movement direction of reciprocating vibration of the welding head during welding; the second direction is a length direction of the welding head; and the second direction is perpendicular to the first direction.

2. The processing mechanism according to claim 1, **characterized in that** a cross section of the welding mark end surface parallel to the first direction is in an arc shape or a smooth curve shape.

3. The processing mechanism according to claim 1 or 2, **characterized in that** a plane passing through the middle portion of the welding head in the first direction and perpendicular to the first direction is an intermediate plane, and two opposite sides of the welding mark end surface on the intermediate plane are respectively a first region and a second region; wherein
the first region and the second region are symmetrically arranged with respect to the intermediate plane; or a bending amplitude of the first region is greater than a bending amplitude of the second region.

4. The processing mechanism according to any one of claims 1 to 3, **characterized in that** points on the welding teeth that are farthest from the welding mark end surface in a direction perpendicular to the welding mark end surface are far points, wherein a surface on which a plurality of far points are located is a far surface, and a middle portion of the far surface in the first direction protrudes so that the far surface is curved in an arch shape.

5. The processing mechanism according to claim 4, **characterized in that** the far surface is parallel to the welding mark end surface.

6. The processing mechanism according to claim 5, **characterized in that** heights of portions of the welding teeth that protrude from the welding mark end surface are equal.

7. The processing mechanism according to any one of claims 1 to 4, **characterized in that** heights of portions of the welding teeth that protrude from the welding mark end surface gradually increase along a direction from the middle portion to two ends of the welding mark end surface in the first direction; and
alternatively, heights of portions of the welding teeth that protrude from the welding mark end surface gradually decrease along a direction from the middle portion to two ends of the welding mark end surface in the first direction.

8. The processing mechanism according to any one of claims 1 to 3, **characterized in that** points on the welding teeth that are farthest from the welding mark end surface in the second direction are far end points, wherein a surface on which a plurality of far end points are located is a far end surface, the far end surface is a plane, and the second direction is perpendicular to the far end surface.

9. The processing mechanism according to any one of claims 1 to 8, **characterized in that** any two adjacent welding teeth on the welding mark end surface are spaced apart.

10. The processing mechanism according to claim 9, **characterized in that** an end of each of the welding teeth close to the welding mark end surface is a tooth root, wherein a joint between a surface of the tooth root and the welding mark end surface is a smooth curved surface.

11. The processing mechanism according to claim 10, **characterized in that** a region of the welding mark end surface between two adjacent welding teeth is recessed into an arc surface, wherein the arc surface is tangent to an edge of the tooth root.

12. The processing mechanism according to any one of claims 1 to 11, **characterized in that** the plurality of welding teeth are arranged in rows and columns on the welding mark end surface.

13. The processing mechanism according to any one of claims 1 to 12, **characterized in that** edges of two ends of the welding head in the first direction are each provided with a first rounded corner; and/or, edges of two ends of the welding head in the third direction are each provided with a second rounded corner; wherein the third direction is perpendicular to the first direction, and the third direction is perpendicular to the second direction.

14. The processing mechanism according to any one of claims 1 to 13, **characterized in that** the welding teeth are in one or several of a partially-spherical shape, a truncated cone shape, and a pyramidal shape.

15. The processing mechanism according to any one of claims 1 to 14, **characterized in that** the processing mechanism further comprises a supporting body, wherein the welding head is mounted on the supporting body.

16. An ultrasonic welding apparatus, **characterized by** comprising the processing mechanism according to any one of claims 1 to 15.
